# EUROPEAN PATENT SPECIFICATION

(11) **EP 2 191 452 B1**
(45) Date of publication and mention of the grant of the patent: **02.01.2019**
(21) Application number: 08795499.6
(22) Date of filing: 21.08.2008
(51) Int. Cl.: G08C 17/02, G08C 23/04, H04N 5/44, H04N 21/422

(54) **REMOTE CONTROL DEVICE AND METHODS FOR IMPROVING LATENCY IN A REMOTE CONTROLLED SYSTEM**
FERNBEDIENUNGSEINRICHTUNG UND VERFAHREN ZUR VERBESSERUNG DER LATENZ IN EINEM FERNBEDIENTEN SYSTEM
DISPOSITIF DE TÉLÉCOMMANDE ET PROCÉDÉS POUR AMÉLIORER LA LATENCE DANS UN SYSTÈME TÉLÉCOMMANDÉ

(30) Priority: 21.09.2007 US 994765 P
(43) Date of publication of application: 02.06.2010
(73) Proprietor: Thomson Licensing, 92130 Issy-les-Moulineaux (FR)
(72) Inventor: COOK, Gregory, William, Lafayette Indiana 47905 (US); MOUICHE, Arnaud, Gwenael, F-74520 Valleiry France (FR); MC CLEARY, Mark, Allen, Indianapolis Indiana 46220 (US); GUTKNECHT, Gary, Noblesville Indiana 46062 (US); FLICKNER, Andrew, Kent, Zoinsville Indiana 46077 (US)
(74) Representative: Tarquis-Guillou, Anne
(86) International application number: PCT/US2008/009965
(87) International publication number: WO 2009/038626

(56) References cited:
- GB-A- 2 231 425
- JP-A- 62 183 277
- US-A- 4 514 732
- US-A1- 2005 088 278

## Description

### FIELD OF THE INVENTION

The present invention relates to a system and method for inputting data from a remote control and more particularly to improving latency in a remote control system.

### BACKGROUND OF THE INVENTION

In wireless remote control systems, particularly wireless systems, it is often the case that, due largely to delays in the wireless encoder/decoder, commands can be generated by a user of a remote control device more rapidly than the controlled host device can perform the requested commands. This is particularly true in remote controls that utilize sequential commands such as channel up/down or volume up/down. The latency often associated with the wireless network may cause the operator to lose track of the final value he desired to input because each address of the series of sequential commands must be sent to the host and executed before the next command is recognized, thus creating a significant lag in feedback to the remote control operator. A means of expediting execution of sequential commands in such a system would significantly improve the operator - machine interface.
Document GB223145 discloses a remote controller for setting timer programming items having a display section with display items next to respective mechanical rotary switches provided for adjusting the items prior to transmission.
Harada discloses, in US patent application 2005/0088278, a remote operating apparatus that includes a selection decision operating device, a controller, a first operation function changing button and a second operation function changing button for changing an operation function of the selection decision operating device. The controller controls the operation function of the selection decision operating device by receiving a signal from the first operation function changing button or the second operation function changing button and switches among a basic controlled state that enables one to select and decide a combination of a plurality of set values, the combination constituted of an operation mode set value of the remote operating apparatus and an input switching set value of a remote operated apparatus, by operation of the selection decision operating device, a first controlled state that enables one to select and decide an operation mode set value of the remote operating apparatus independently by operation of the selection decision operating device when the first operation function changing button is pressed, and a second controlled state that enables one to select and decide an input switching set value of the remote operated apparatus independently by operation of the selection decision operating device when the second operation function changing button is pressed.

### SUMMARY OF THE INVENTION

The invention is defined by the independent claims. Exemplary embodiments are defined in the dependent claims.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

There is disclosed a remote control device that comprises means for generating values of a sequential series of operator input values and means for communicating only a final value of the sequential series of operator input values for controlling a host device. The sequential series of operator input values may advantageously include, for example, channel scan addresses, volume control commands and may be implemented by a rotary input device.

Also disclosed is a method comprising the steps of generating values of a sequential series of operator input values and transmitting_to a host device a final value of the sequential series of operator input values.

Further, a method comprising the steps of storing an indicator of a current operating function, activating an indicator representative of the function, initiating timing of an interval responsive to a control address request, displaying, perhaps on a display of a remote control, an indication of the control address in association with the indicator representative of the function, storing the control address, repeating the above control address request related steps until the timing interval expires and communicating the last control address to a device, such as, for example a remotely controlled decoder.

### BRIEF DESCRIPTION OF THE DRAWINGS

In the drawings:
Figure 1 is a block diagram of exemplary wireless system components;
Figure 2 is a block diagram of a representative wireless remote control device;
Figure 3 is a representation of a wireless system wherein graphics are generated in a decoder;
Figure 4 is a representation of a wireless system wherein graphics are generated in a remote control;
Figure 5 is a representation of a wireless system wherein graphics are generated in a decoder and helper graphics are generated in a remote control;
Figure 6 is a representation of a remote control displaying inventive embodiments of the present invention;
Figure 7 is a representation of a remote control displaying further inventive embodiments of the present invention;
Figure 8 is a flow diagram of operation of embodiments of the present invention; and
Figure 9 is a flow diagram of operation of further embodiments of the present invention.

### DETAILED DESCRIPTION OF THE PREFERRED EMBODIMENTS

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

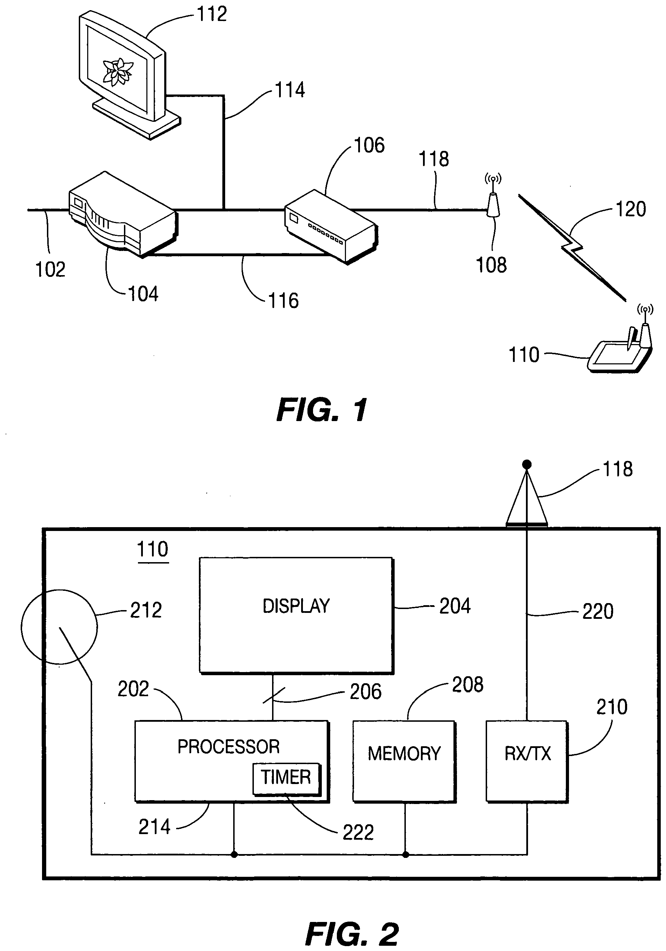

Figure 1 is block diagram of a system in accordance with an exemplary embodiment of the present invention. The system shown in Figure 1 comprises an input signal 102 from an external network feed, a decoder device 104, an A/V converter 106, a wireless transmitter/receiver 108, a remote control device 110 and a television display device 112. The external network which supplies input signal 102 may comprise a cable TV system, satellite signal delivery from an outdoor dish antenna or a network such as a Multiple Dwelling Unit system, often referred to as an MDU system. The input signal 102 is typically applied to decoder 104 where transport streams are decoded into selected program streams containing desired audio, video and channel guide and other control data. The audio/video program data are typically output from decoder 104 as analog signals 114 and are applied to external inputs of television display 112. The analog audio/video signals may be applied also to the inputs of A/V converter 106 where they are converted to digital A/V signals. Decoder information and control data 116 may also be applied to A/V converter 106 where they are multiplexed with the digital A/V signals to form digital A/V/C stream 118. Digital A/V/C stream 118 is applied to wireless transmitter/receiver 108 to be formatted in any of several appropriate wireless communication protocols.

Figure 2 depicts in more detail the exemplary remote device 110. At the heart of remote device 110 is processor 202, which drives display 204 by way of video bus 206. Processor 202 communicates with its associated memory 208, the wireless communication device 210 and thumbwheel 212, by way of communication bus 214. Communication device 210 is connected to its associated antenna 218 by an appropriate cable 220. The hash marks on video bus 206 and communication bus 214 indicate the buses to be multi-wire cable assemblies. Although communication device 210 is shown as using a radio frequency medium, it should be understood that any of several remote control protocols such as RF, WI-FI, infra-red, Bluetooth, etc. or even wired remote control protocols could be used.

In operation, the processor 202 is used to generate control addresses, e.g., channel numbers in response to inputs from the user interface device, in this embodiment channel up/down scan requests from thumbwheel 212. The control addresses and function commands are generated in processor 202 and stored, as necessary, in memory 208. Processor 202 also contains timer 222, used to determine when a control address is to be sent from memory 208 to the remote transmitter included in communication device 210. Processor 202 formats video data, which was received by the receiver included in communication device 210, and drives display device 204 by way of video bus 206.

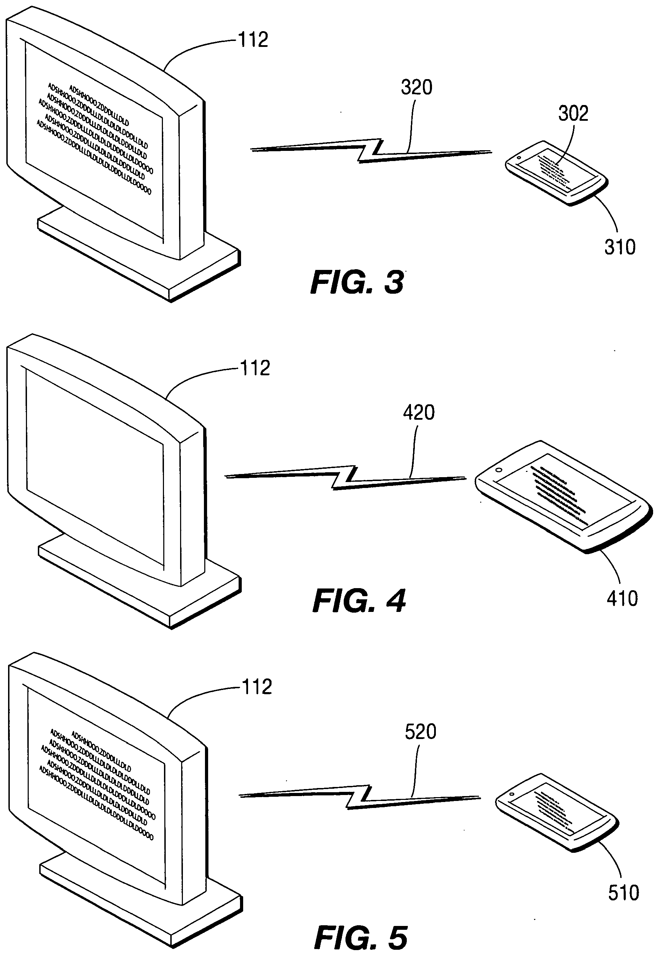

Wireless signals 120 may be configured to communicate bi-directionally with other devices such as, for example, remote device 110. A system so configured and described may advantageously support an embodiment of the present invention. As depicted in figure 3 the bi-directional nature of a system so configured allows a remote device 310 having its own TV display device 302 to advantageously display audio/video material as it is being displayed on the television display 112. The system may also communicate control information from remote device 310 to decoder 104 of figure 1. It is possible in such a system that wireless signal 320 comprises audio/video and control data. Control of devices such as decoder 104 may be accomplished by various techniques including use of an electronic program guide (EPG) or Guide. When displayed on a display device, a Guide provides a visible representation comprising, for example, a matrix or grid indicating programming or content available during various time periods from each of one or more input signal sources such as the exemplary external network feed signal 102 shown in Figure 1. On-screen graphics, such as, for example guide data may be generated and reside in decoder 104.

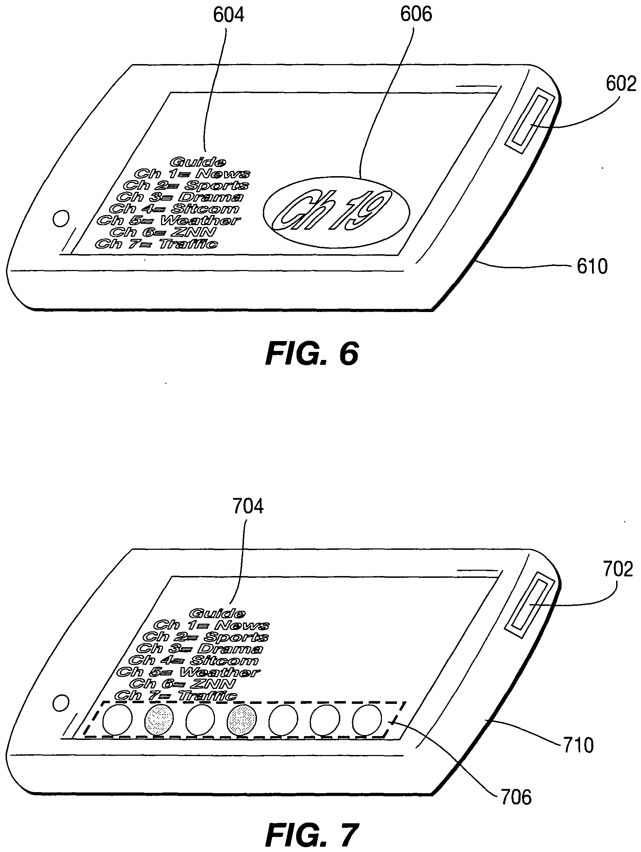

Another exemplary embodiment is depicted in figure 4. In such an embodiment it is possible that guide data are retained in remote device 410 which may generate guide graphics to be viewed only on the remote device. In such an embodiment only rudimentary function commands such as channel up/down, PVR play/fast forward/reverse would be communicated from remote device 410 to decoder 104. In such a system where the guide data and graphics user interface (UI) are retained in the remote device, latency of execution of control commands is improved over the instance where guide UI is resident in decoder 104; however, the remote device must be specifically paired with the set-top decoder and downloads of guide data must be made twice; first from the network to the decoder and then from the decoder to the remote device.
An exemplary embodiment that can significantly improve the latency of control execution is depicted in figure 5. The system of figure 5 retains the guide data and graphics generation in the set-top decoder. Guide helper graphics may be generated and displayed on remote device 510. An exemplary embodiment of such a helper application is shown in Figure 6. In this case, when thumbwheel 602 is activated, the helper application operates to produce in remote device 610 a "Channel" graphics overlay. As can be seen in figure 6, a display produced by remote device 610 includes a first portion 604, designated remote video, that provides user interface information, such as program guide information, generated by decoder 104 and provided by the decoder to the remote device via the information communication channel in signal 520. In addition, the display on the remote viewer includes a second portion displaying, e.g., a channel graphic overlay 606 created locally by the helper application. In figure 6, the second portion of the display indicates the proper control address, in this case the channel number that is selected. Alternatively, the number of channel steps to be skipped, may be sent directly in response to a particular condition, e.g., rotation of the thumbwheel stops for a predetermined period of time. In this way, remote device 610 withholds sending sequential commands to the set-top decoder, only sending the final selected control address. The local overlay as used in this case ensures that the UI displayed on the remote viewer responds rapidly as a local control such as the thumbwheel operates, thereby allowing the display on remote device 610 to provide desirable UI features that operate as a user would expect and without being adversely affected by the latency of the system. That is, use of the helper application ensures that the thumbwheel settings are accurately and quickly reflected in the UI display on the remote viewer despite any latency that may result from operation of the settop box and/or communication between the settop box and remote viewer.

A further embodiment is depicted in figure 7, wherein graphic overlay 706 (shown in phantom) comprises indicators for multiple, context sensitive, functions commands. For example, display overlay 706 in figure 7 comprises buttons across the bottom of the display. Such buttons may be helpful to a user, e.g., in order to extend the number of functions available. The buttons provided in the display could change in response to the particular context or use intended for the buttons. For example, the buttons in the display overlay could be in numeric form when numeric input is required. The form could be in shapes indicating play/pause/fast forward/reverse operations when intended to control display of recorded content. Alternatively, as shown in figure 7, the buttons could be colored and/or shaped and/or otherwise configured dependant on context as required. Even though all of the program guide, list of recorded programs, and system information is contained in the decoder, by having the remote device cooperate with the decoder, we can implement a set of context sensitive buttons. For example, if it is known that the decoder is currently displaying Guide information, then thumbwheel 602 can be used for sending channel up/down related control addresses corresponding to channel scan function commands. If it is known that a digital video recorder (DVR) is in use, then thumbwheel 602 can be used for fast forward, reverse, frame forward, frame backward, and play/pause control addresses corresponding to the appropriate function commands. In the play/pause case, the thumbwheel may also be pressed in to toggle between pause and play. If the system menu is selected, then the thumbwheel can control up/down cursors and select. If no other function is selected, rotation of the thumbwheel could be interpreted as controlling volume function commands. While the preceding description refers to use of a thumbwheel for initiating sequential commands, it should be understood that other devices such as, for example, touch pads, touch screens or push switches could be used as well.

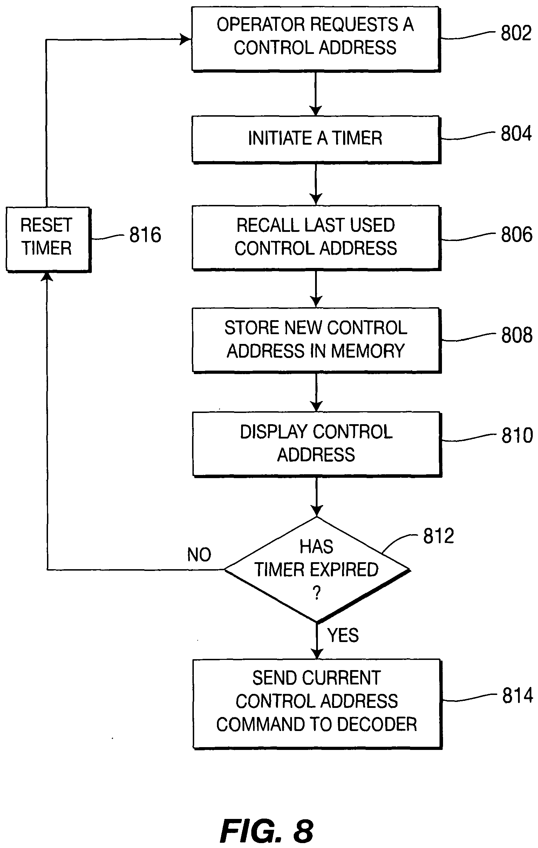

Figure 8 is a flow diagram illustrating an embodiment of the present invention. The process flow begins in step 802 when an operator requests a new control address, for example a CHANNEL UP command. A timer begins at step 804, after the control address command is requested. The previously last used control address is recalled from memory at step 806 and updates the control memory register in step 808. The control address requested is displayed on the display of the remote device in step 810 and if the timer has not expired at step 812, the process continues with the timer being reset at step 816 then the operator requesting another control address. If the operator stops requesting new control addresses the timer is allowed to expire at step 812 and the final control address requested is sent to the decoder at step 814. In this way, the method "skips" intermediate control addresses, i.e., only the current value (control address) is communicated or sent and not all intermediate addresses that occur prior to expiration of the timer interval.

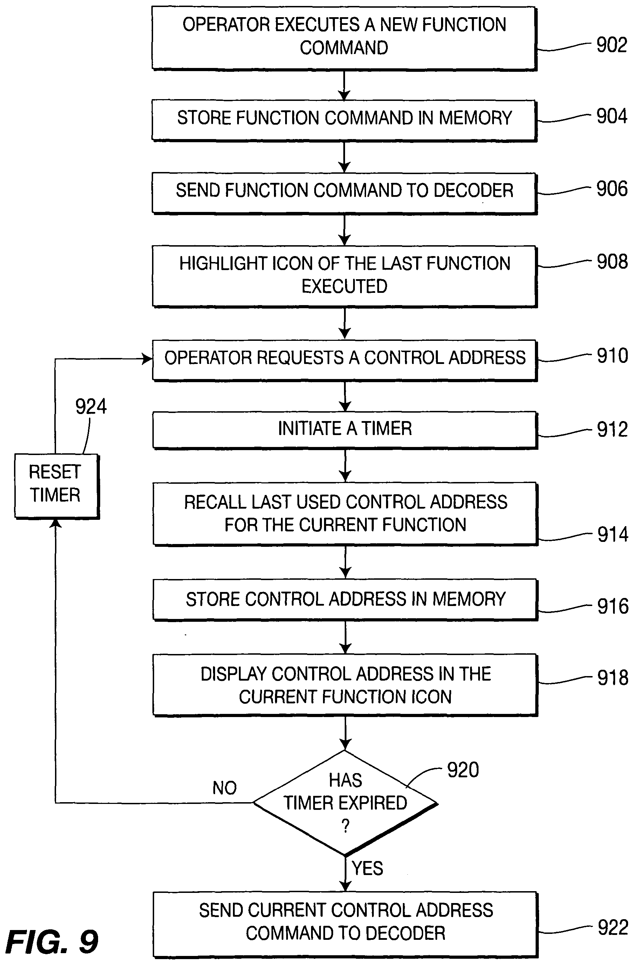

Figure 9 discloses an embodiment that expands the functionality that was embodied in figure 8 by incorporating context sensitive control. In beginning the process at step 902, an operator executes a new function, for example an Electronic Program Guide (EPG) which is stored in local memory at step 904 and communicated to the decoder in step 906. An icon on the display of the remote device may be highlighted at step 908 as a reminder of the function command that is active in the decoder. In the context of an EPG, the expected control address is a channel address, which the operator may request as in step 910. In a manner similar to the embodiment described in regard to figure 8, steps 912, 914, 916, and 918, initiate a timer, recall the last used address for the function currently in use, store a new control address in the appropriate memory and display an indicator of the control address in the icon representing the currently active function. At step 920, the process checks to see if the operator has allowed the timer to expire, in which case the control address is sent to the decoder in step 922. If the timer has not expired in step 920, the timer is reset in step 924 and the operator requests another control address in step 910.
While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims.

## Claims

1. A communication device (110) comprising means for withholding a sending to a host device of a value generated in response to an operator command and adapted to control said host device, until a timer (222), initiated in response to said operator command, expires, said means for withholding being adapted to be performed for a sequence of values generated in response to a sequence of operator commands, said communication device being adapted for:
- resetting said timer (222) when one value of said sequence of values is generated prior to an expiration of said timer (222);
- sending only the last generated value, amongst said generated values, when said timer (222) expires.

2. The communication device according to claim 1 wherein the generated values use at least one address of a channel scan, a volume level, a fast forward speed, and/or a number of frames backwards, cursor up, cursor down, cursor right, cursor left and select.

3. The communication device according to any of claims 1 or 2 wherein the generated values are produced by rotation of a rotary device.

4. The communication device according to claim 3 wherein said generated values produced by rotation of the rotary device use different classes of addresses depending on a state of the host device.

5. The communication device according to claim 4 wherein the classes of addresses comprise one of channel up/down, forward/reverse, volume up/down, and up/down navigation inputs.

6. The communication device according to any of claims 1 to 5 wherein it comprises a remote display device.

7. The communication device according to claim 6 wherein the remote display device is configured to display the same information as is displayed by the host device.

8. The communication device according to claim 6 or 7 wherein it comprises means for displaying at least one graphic overlay on said remote display device.

9. The communication device according to claim 8 wherein said graphic overlay is adapted to indicate commands of at least one function.

10. The communication device of claim 9 wherein said function comprises one of the functions of channel change, volume change, fast forward, reverse, frame forward, frame backward, play, pause and cursor navigation.

11. The communication device according to any of claims 1 to 10 wherein electronic program guide data reside in said communication device.

12. A method to be performed in a communication device (110) comprising:
- withholding a sending to a host device of a value generated in response to an operator command and adapted to control said host device, until a timer (222), initiated in response to said operator command, expires, said withholding being performed for a sequence of values generated in response to a sequence of operator commands,
- resetting said timer (222) when one value of said sequence of values is generated prior to an expiration of said timer (222); and
- sending only the last generated value, amongst said generated values, when said timer (222) expires.

13. The method according to claim 12 wherein said host device is a remotely located decoder.

14. The method according to claim 12 or 13 wherein the generated values use at least one address of a channel scan, a volume level, a fast forward speed, and/or number of frames backwards, cursor up, cursor down, cursor right, cursor left and select.

15. The method according to any of claims 12 to 14 wherein the generated values are produced by rotation of a rotary device.

## Patentansprüche

1. Kommunikationsvorrichtung (110), die ein Mittel umfasst, um ein Senden eines Werts an eine Host-Vorrichtung, wobei der Wert als Reaktion auf einen Betreiberbefehl erzeugt wurde und dafür ausgelegt ist, die Host-Vorrichtung zu steuern, zurückzuhalten, bis ein als Reaktion auf den Betreiberbefehl initiierter Zeitmesser (222) abläuft, wobei das Mittel zum Zurückhalten dafür ausgelegt ist, für eine Folge von Werten ausgeführt zu werden, die als Reaktion auf eine Folge von Betreiberbefehlen erzeugt wurden, wobei die Kommunikationsvorrichtung ausgelegt ist zum:
- Zurücksetzen des Zeitmessers (222), wenn ein Wert der Folge von Werten vor einem Ablauf des Zeitmessers (222) erzeugt wird;
- Senden nur des letzten erzeugten Werts unter den erzeugten Werten, wenn der Zeitmesser (222) abläuft.

2. Kommunikationsvorrichtung nach Anspruch 1, wobei die erzeugten Werte mindestens eine Adresse einer Kanalabtastung, einen Lautstärkepegel, eine Geschwindigkeit des schnellen Vorlaufs und/oder eine Anzahl von Einzelbildern rückwärts, Cursor auf, Cursor ab, Cursor rechts, Cursor links und Auswahl verwenden.

3. Kommunikationsvorrichtung nach einem der Ansprüche 1 oder 2, wobei die erzeugten Werte durch Drehung einer Drehvorrichtung hergestellt werden.

4. Kommunikationsvorrichtung nach Anspruch 3, wobei die erzeugten Werte, die durch Drehung der Drehvorrichtung hergestellt werden, unterschiedliche Klassen von Adressen verwenden, die von einem Zustand der Host-Vorrichtung abhängen.

5. Kommunikationsvorrichtung nach Anspruch 4, wobei die Klassen von Adressen die Eingaben Kanal auf/ab oder Vorwärts/Rückwärts oder Lautstärke höher/niedriger oder Navigation nach oben/nach unten umfassen.

6. Kommunikationsvorrichtung nach einem der Ansprüche 1 bis 5, wobei sie eine Fernanzeigevorrichtung umfasst.

7. Kommunikationsvorrichtung nach Anspruch 6, wobei die Fernanzeigevorrichtung dafür konfiguriert ist, dieselben Informationen anzuzeigen, wie sie durch die Host-Vorrichtung angezeigt werden.

8. Kommunikationsvorrichtung nach Anspruch 6 oder 7, wobei sie ein Mittel umfasst, um mindestens eine grafische Überlagerung auf der Fernanzeigevorrichtung anzuzeigen.

9. Kommunikationsvorrichtung nach Anspruch 8, wobei die grafische Überlagerung dafür ausgelegt ist, Befehle mindestens einer Funktion anzugeben.

10. Kommunikationsvorrichtung nach Anspruch 9, wobei die Funktion eine der Funktionen Kanalwechsel, Lautstärkeänderung, schneller Vorlauf, Rücklauf, Einzelbild vorwärts, Einzelbild rückwärts, Wiedergabe, Pause und Cursor-Navigation umfasst.

11. Kommunikationsvorrichtung nach einem der Ansprüche 1 bis 10, wobei in der Kommunikationsvorrichtung Daten eines elektronischen Programmführers liegen.

12. Verfahren, das in einer Kommunikationsvorrichtung (110) ausgeführt werden soll, wobei das Verfahren umfasst:
- Zurückhalten eines Sendens eines Werts an eine Host-Vorrichtung, wobei der Wert als Reaktion auf einen Betreiberbefehl erzeugt wurde und dafür ausgelegt ist, die Host-Vorrichtung zu steuern, bis ein als Reaktion auf den Betreiberbefehl initiierter Zeitmesser (222) abläuft, wobei das Zurückhalten für eine Folge von Werten ausgeführt wird, die als Reaktion auf eine Folge von Betreiberbefehlen erzeugt wurden;
- Zurücksetzen des Zeitmessers (222), wenn ein Wert der Folge von Werten vor einem Ablauf des Zeitmessers (222) erzeugt wird;
- Senden nur des letzten erzeugten Werts unter den erzeugten Werten, wenn der Zeitmesser (222) abläuft.

13. Verfahren nach Anspruch 12, wobei die Host-Vorrichtung ein fern befindlicher Decodierer ist.

14. Verfahren nach Anspruch 12 oder 13, wobei die erzeugten Werte mindestens eine Adresse einer Kanalabtastung, einen Lautstärkepegel, eine Geschwindigkeit des schnellen Vorlaufs und/oder eine Anzahl von Einzelbildern rückwärts, Cursor auf, Cursor ab, Cursor rechts, Cursor links und Auswahl verwenden.

15. Verfahren nach einem der Ansprüche 12 bis 14, wobei die erzeugten Werte durch Drehung einer Drehvorrichtung hergestellt werden.

## Revendications

1. Dispositif de communication (110) comprenant un moyen pour suspendre l'envoi vers un dispositif hôte d'une valeur générée en réponse à une commande 'opérateur et adaptée pour contrôler ledit dispositif hôte, jusqu'à ce qu'un temporisateur (222), lancé en réponse à ladite commande 'opérateur, expire, ledit moyen pour suspendre étant adapté pour être exécuté pour une séquence de valeurs générée en réponse à une séquence de commandes opérateur, ledit dispositif de communication étant adapté pour :
- réinitialiser ledit temporisateur (222) lorsqu' une valeur de ladite séquence de valeurs est générée avant l'expiration dudit temporisateur (222) ;
- envoyer uniquement la dernière valeur générée, parmi lesdites valeurs générées, lorsque ledit temporisateur (222) expire.

2. Dispositif de communication selon la revendication 1 dans lequel les valeurs générées utilisent au moins une adresse de balayage de canaux, de niveau de volume, de vitesse d'avance rapide et/ou un nombre de trames en arrière, de curseur vers le haut, de curseur vers le bas, de curseur vers la droite, de curseur vers la gauche et sélection.

3. Dispositif de communication selon l'une quelconque des revendications 1 et 2 dans lequel les valeurs générées sont produites par rotation d'un dispositif rotatif.

4. Dispositif de communication selon la revendication 3 dans lequel lesdites valeurs générées produites par rotation dudit dispositif rotatif utilisent différentes classes d'adresses en fonction de l'état du dispositif hôte.

5. Dispositif de communication selon la revendication 4 dans lequel les classes d'adresses comprennent l'un des éléments d'entrée suivants : canal suivant/précédent, avance/retour, augmentation/diminution du volume et navigation vers le haut/le bas.

6. Dispositif de communication selon l'une quelconque des revendications 1 à 5 dans lequel il comprend un dispositif d'affichage distant.

7. Dispositif de communication selon la revendication 6 dans lequel le dispositif d'affichage distant est configuré pour afficher les mêmes informations que celles affichées par le dispositif hôte.

8. Dispositif de communication selon la revendication 6 ou 7 dans lequel il comprend un moyen pour afficher au moins une incrustation graphique sur ledit dispositif d'affichage distant.

9. Dispositif de communication selon la revendication 8 dans lequel ladite incrustation graphique est adaptée pour indiquer des commandes d'au moins une fonction.

10. Dispositif de communication selon la revendication 9 dans lequel ladite fonction comprend l'une des fonctions suivantes : changement de canal, changement de volume, avance rapide, retour, trame suivante, trame précédente, lecture, mise en pause et navigation avec le curseur.

11. Dispositif de communication selon l'une quelconque des revendications 1 à 10, dans lequel les données du guide de programmes électronique résident dans ledit dispositif de communication.

12. Procédé à exécuter dans un dispositif de communication (110), comprenant :
- une suspension d'un envoi vers un dispositif hôte d'une valeur générée en réponse à une commande de l'opérateur et adaptée pour contrôler ledit dispositif hôte, jusqu'à ce qu'un temporisateur (222), lancé en réponse à ladite commande de l'opérateur, expire, ladite suspension étant adaptée pour une séquence de valeurs générée en réponse à une séquence de commandes de l'opérateur,
- une réinitialisation dudit temporisateur (222) lorsqu'une valeur de ladite séquence de valeurs est générée avant l'expiration dudit temporisateur (222) ; et
- un envoi de la dernière valeur générée uniquement, parmi lesdites valeurs générées, lorsque ledit temporisateur (222) expire.

13. Procédé selon la revendication 12, dans lequel ledit dispositif hôte est un décodeur situé à distance.

14. Procédé selon la revendication 12 ou 13, dans lequel les valeurs générées utilisent au moins une adresse de balayage de canaux, de niveau de volume, de vitesse d'avance rapide et/ou un nombre de trames en arrière, de curseur vers le haut, de curseur vers le bas, de curseur vers la droite, de curseur vers la gauche et sélection.

15. Procédé selon l'une quelconque des revendications 12 à 14 dans lequel les valeurs générées sont produites par rotation d'un dispositif rotatif.
